# EUROPÄISCHE PATENTSCHRIFT

(11) **EP 2 208 886 B1**
(45) Veröffentlichungstag und Bekanntmachung des Hinweises auf die Patenterteilung: **18.03.2015**
(21) Anmeldenummer: 10150625.1
(22) Anmeldetag: 13.01.2010
(51) Int. Cl.: F03D 7/02, F03D 7/04

(54) **Motorbelastungsreduktion bei einer Windenergieanlage**
Reduction of engine strain of a wind energy assembly
Réduction de la charge motrice dans une éolienne

(30) Priorität: 20.01.2009 DE 102009005516
(43) Veröffentlichungstag der Anmeldung: 21.07.2010
(60) Teilanmeldung: 15150159.0
(73) Patentinhaber: Senvion SE, 22297 Hamburg (DE)
(72) Erfinder: Altemark, Jens, 24768 Rendsburg (DE); Letas, Heinz-Hermann, 23701 Süsel / Groß Meinsdorf (DE); Hopp, Eckart, 24790 Schülldorf (DE); Krüger, Thomas, 24784 Westerrönfeld (DE)
(74) Vertreter: Seemann, Ralph

(56) Entgegenhaltungen:
- EP-A1- 2 037 119
- EP-A2- 0 995 904
- WO-A1-02/064973
- DE-A1-102006 029 640
- CASELITZ P ET AL: "REDUCTION OF FATIGUE LOADS ON WIND ENERGY CONVERTERS BY ADVANCED CONTROL METHODS", EUROPEAN WIND ENERGY CONFERENCE, XX, XX, 1. Oktober 1997 (1997-10-01), Seiten 555-558, XP008031751,

## Beschreibung

Die Erfindung betrifft eine Windenergieanlage mit einem Rotor und wenigstens einem winkelverstellbaren Rotorblatt und einem elektrischen Motor, insbesondere einem Asynchronmotor, zur Bewegung eines bewegbaren Teils der Windenergieanlage, wobei die Windenergieanlage außerdem eine Regelvorrichtung aufweist. Bei dem bewegbaren Teil kann es sich typischerweise um ein Maschinenhaus handeln, das in dessen Azimutwinkel zum Wind hin ausgerichtet werden soll, oder um ein Rotorblatt, das im Hinblick auf dessen Blattwinkel, der auch als Pitchwinkel bezeichnet wird, zu verstellen ist. Die Erfindung betrifft ferner ein Verfahren zum Betreiben einer Windenergieanlage mit einem Rotor und wenigstens einem winkelverstellbaren Rotorblatt, einem elektrischen Motor, insbesondere einem Asynchronmotor, und mit einer Regelvorrichtung.

Eine motorische Windrichtungsnachführung des Maschinenhauses für eine Windenergieanlage ist an sich bekannt. So ist beispielsweise in dem Lehrbuch von Erich Hau, Windkraftanlagen, 4. Auflage, Springer-Verlag, Seiten 346 ff., ein Windrichtungsnachführungssystem auch als Azimutverstellsystem benannt. Dieses System dient dazu, den Rotor und das Maschinenhaus automatisch nach der Windrichtung auszurichten. Es handelt sich um eine selbstständige Baugruppe in der Windenergieanlage, die vom konstruktiven Standpunkt aus gesehen, den Übergang vom Maschinenhaus zum Oberteil des Turms bildet. Die Verstelleinrichtung dreht hierbei das Maschinenhaus mit dem Rotor im Wesentlichen um die Längsachse des Turms, also um den Azimutwinkel. Hierzu ist ein Stellantrieb in Form eines elektrischen Motors, der häufig als Asynchronmotor ausgebildet ist, vorgesehen, und außerdem ein Getriebe sowie eine Bremse.

Während des Betriebs einer Windkraftanlage können insbesondere bei turbulenten Winden in Abhängigkeit vom Gierwinkel des Rotors sehr hohe Kräfte und damit sehr hohe Drehmomente, sogenannte Giermomente, auftreten. Diese sehr hohen Drehmomente können sowohl während einer Nachführbewegung des Maschinenhauses als auch während des Stillstands des Maschinenhauses auftreten. Hierbei kann es bei der Nachführbewegung des Maschinenhauses bei den Antriebsmotoren zu Leistungsspitzen führen, die die Lebensdauer der Motoren und der mit den Motoren verbundenen Getriebe verringert und außerdem dazu führt, dass ein Motorschutzschalter auslöst, was automatisch zur Stilllegung der Windenergieanlage führt, da der Motorschutzschalter in der Regel Bestandteil der Sicherheitskette der Windenergieanlage ist. Die Wiederinbetriebnahme des Motors bei der Windenergieanlage ist dann relativ zeitaufwändig und führt zu relativ hohen Stromerzeugungsausfällen der Windkraftanlage.

Entsprechende Probleme können auch bei den Antriebsmotoren der Winkelverstellung von Rotorblättern auftreten. Auch hier können bei entsprechend turbulenten Winden Zustände auftreten, in denen der Motorschutzschalter auslöst, so dass eine weitere Verstellung des Rotorblatts nicht mehr möglich ist, was auch zu gefährlichen Situationen führen kann bzw. zur Stilllegung der Windenergieanlage. Aus diesem Grunde werden üblicherweise relativ groß dimensionierte elektrische Motoren zur Blattwinkelverstellung der Rotorblätter verwendet bzw. mehrere Motoren dienen gleichzeitig bzw. parallel dazu, die Verstellung des Rotorblattes und auch die Verstellung des Azimutwinkels des Maschinenhauses vorzunehmen.

EP 1 362 183 B1 offenbart eine Azimutnachführung einer Windkraftanlage, bei der eine Steuerung der Rotorblattverstellung in Abhängigkeit einer Abweichung zwischen der ermittelten Windrichtung und der erfassten Azimutposition und in Abhängigkeit der Auslenkung eines Turms der Windenergieanlage aus der Vertikalen bei einer schwimmenden Windenergieanlage vorgenommen wird. Hierbei wird ein Kräfteungleichgewicht zwischen verschiedenen Rotorblättern ausgenutzt, so dass ein Azimutantrieb in Form eines elektrischen Motors nicht oder mit geringer Leistung eingeschaltet werden muss, um eine Azimutbewegung zu erzielen.

Aus EP 1 882 852 A1 ist eine Windenergieanlage mit einem Maschinenhaus und einem Rotor und mit mindestens einem um seine Längsachse verstellbaren Rotorblatt bekannt, wobei eine Verstelleinrichtung vorgesehen ist, über die eine Azimutausrichtung des Maschinenhauses oder eine Pitchausrichtung des mindestens einen Rotorblatts motorisch einstellbar ist, wobei die Verstelleinrichtung mindestens einen Motor aufweist und wobei eine Steuerung für den Motor vorgesehen ist, die das auftretende Moment an dem Motor auf einen vorbestimmten Maximalwert begrenzt. Hierbei wird ein stärkerer Motor verwendet, der ein höheres Kippmoment zur Folge hat, das ohne Drehmomentbegrenzung das verwendete Getriebe überlasten würde. Oberhalb eines maximalen Haltemoments wird ein Durchrutschen der elektrischen Bremse, die als Betriebsbremse eingesetzt wird, zugelassen. Bei der Auslegung des Getriebes auf ein Maximalmoment wird bei niedrigen Drehmomentwerten schon ein Durchrutschen der Elektrobremse zugelassen. Das Moment des Motors wird durch Ansteuerung mit unterschiedlichen Frequenzen begrenzt.

In DE 103 07 929 A1 ist eine Anordnung zur Drehung einer Maschinengondel, insbesondere für eine Windkraftanlage, offenbart, die eine Gondellagerung zur drehbaren Lagerung der Maschinengondel auf einem Turm und zumindest einen Antrieb zur Drehung der Maschinengondel gegenüber dem Turm aufweist, wobei der Antrieb mit einer Befestigung an der Maschinengondel oder am Turm angeordnet ist. Die Befestigung des Antriebs weist zumindest eine Reibfläche zum Festklemmen des Antriebs auf, so dass ab einer vorgegebenen mechanischen Belastung der Antrieb in der Befestigung bewegbar ist. Hierdurch wird eine Überbeanspruchung des Antriebs vermieden. Es ist außerdem ein Sensorsystem vorgesehen, das eine Bewegung des Antriebs in der Befestigung registriert und für diesen Fall der Anlagesteuerung und/oder einer Überwachungszentrale ein Signal sendet.

Aus EP 2 037 119 A1 (zwischen literatur) ist eine Steuerung für einen Azimutantrieb einer Windenergieanlage bekannt, mit dem die Belastung des Azimutsystems reduziert wird.

EP 0 995 904 A2 offenbart eine Windkraftanlage mit einem Rotor, der mindestens zwei Blätter mit verstellbaren Anstellwinkeln aufweist und einem Aufnehmer, der eine Messgröße liefert, die ein Maß für die aktuelle Belastung eines Elements der Struktur der Anlage bildet, wobei der Anstellwinkel in Abhängigkeit von der Messgröße verändert wird, die eine Beschleunigung oder Verformung des Bauelements repräsentiert, die über einen entsprechenden Aufnehmer erfasst wird und ein Maß für eine Kraft oder ein Moment bildet, wobei der Aufnehmer in einem Rotorblatt vorgesehen ist und/oder die Rotorblätter einzeln verstellbar sind.

Aufgabe der vorliegenden Erfindung ist es, eine Windenergieanlage und ein Verfahren zum Betreiben einer Windenergieanlage anzugeben, mittels der ein sicherer Betrieb möglich ist, wobei vorzugsweise zum Bewegen von bewegbaren Teilen der Windenergieanlage möglichst kleindimensionierte elektrische Motoren Verwendung finden sollen.

Gelöst wird diese Aufgabe durch den Gegenstand der Ansprüche 1 und 9. Erfindungsgemäß ist vorgesehen, eine Windenergieanlage mit einem Rotor und wenigstens einem winkelverstellbaren Rotorblatt und einem elektrischen Motor, insbesondere einem Asynchronmotor, zur Bewegung eines bewegbaren Teils der Windenergieanlage, wobei die Windenergieanlage außerdem eine Regelvorrichtung aufweist, wobei eine Messvorrichtung zur Bestimmung der Belastung des elektrischen Motors vorgesehen ist, wobei die Regelvorrichtung bei Überschreiten einer vorgebbaren ersten Belastungsgrenze des elektrischen Motors die Belastung des Motors durch Reduktion der Drehzahl des Rotors, durch Änderung des Blattwinkels des wenigstens einen Rotorblatts und/oder durch Reduktion der Leistung der Windenergieanlage reduziert, wobei die Belastung des elektrischen Motors auf einen Wert unterhalb der vorgebbaren ersten Belastungsgrenze geregelt wird, wobei die Messvorrichtung eine Drehzahlmessvorrichtung des elektrischen Motors, eine Strommessvorrichtung für den Strom, der in dem oder in den elektrischen Motor fließt und/oder eine Drehmomentmessvorrichtung zur Messung des Moments, das auf den elektrischen Motor wirkt bzw. das der elektrische Motor auf das bewegbare Teil ausübt.

Erfindungsgemäß wird somit ein Regel- und/oder Steuereingriff auf einen Parameter der Windenergieanlage vorgenommen, der dafür sorgt, dass hohe Torsionsmomente, beispielsweise eine Turmtorsion, die zu große Momente auf bewegbare Teile der Windenergieanlage antreibende elektrische Motoren hervorrufen, reduziert werden. Dieses kann beispielsweise durch Reduktion der Drehzahl des Rotors, durch Änderung des Blattwinkels des wenigstens einen Rotorblatts und/oder durch Reduktion der Leistung der Windenergieanlage geschehen. Bei einer Leistungsreduktion der Windenergieanlage, beispielsweise durch geringere Entnahme von Leistung aus dem Generator oder bei einer Drehzahlreduktion sowie bei einem Verschwenken der Rotorblätter in Richtung Fahnenstellung, nimmt die Turmtorsion und damit auch das Drehmoment, das auf den elektrischen Motor wirkt, deutlich ab. Hierdurch ist ein sicherer Betrieb der Windenergieanlage möglich. Ferner können kleiner dimensionierte Motoren verwendet werden.

Hierdurch ist ein noch sichererer Betrieb der Windenergieanlage möglich. Vorzugsweise ist die Stärke des Eingriffs auf die Maßnahme, die zur Verringerung der Belastung des elektrischen Motors führt, in Abhängigkeit von der Abweichung der Belastung von der ersten Belastungsgrenze, wobei eine geringere Abweichung einen schwächeren Eingriff bedeutet und eine größere Abweichung einen stärkeren Eingriff. Vorzugsweise wird mit einem Regelalgorithmus geregelt, der einem PID-Regler im Wesentlichen entspricht oder der ein derartiger PID-Regler ist.

Besonders bevorzugt ist die Maßnahme, dass das bewegbare Teil ein Maschinenhaus der Windenergieanlage ist, das auf einem Turm angeordnet ist und dessen Azimutwinkel durch den elektrischen Motor änderbar ist, und/oder dass das bewegbare Teil das wenigstens eine winkelverstellbare Rotorblatt ist und die Bewegung, die durch den elektrischen Motor hervorgerufen wird, eine Winkelverstellung des Blattwinkels ist. Der elektrische Motor, der vorzugsweise ein Asynchronmotor ist, ist dann beispielsweise ein Azimutwinkelverstellmotor oder ein Pitchwinkelverstellmotor. Es können auch jeweils mehrere Motoren vorgesehen sein, um den Azimutwinkel des Turmkopfes bzw. des Maschinenhauses zu verstellen und entsprechend auch mehrere Motoren vorgesehen sein, um den Blattwinkel des Rotorblatts zu verstellen.

Vorzugsweise geschieht zur Reduktion der Belastung des elektrischen Motors eine, insbesondere periodische, Blattwinkeländerung des wenigstens einen Rotorblatts und/oder eines anderen Rotorblatts, die eine Kraft auf das bewegbare Teil in eine vorgebbare Bewegungsrichtung hervorruft, wobei die Bewegungsrichtung die durch den Motor vorgegebene Bewegungsrichtung darstellt. Der Motor wird dabei durch die das bewegbare Teil antreibende Kraft unterstützt. Die Kraft, die durch die Blattwinkeländerung auf das bewegbare Teil wirkt, ist also in Richtung der durch den elektrischen Motor hervorgerufenen Bewegung gerichtet bzw. zumindest eine Komponente der Richtung der Kraft geht in die Richtung der durch den elektrischen Motor hervorgerufenen Bewegung. Hierbei wird die Maßnahme angewendet, die in EP 1 362 183 B1 beispielsweise dazu dient, die Azimutbewegung des Maschinenhauses bzw. des Turmkopfes der Windenergieanlage zu erzielen. Im Unterschied zur EP 1 362 183 B1 wird die Unterstützung der durch Blattwinkeländerungen hervorgerufenen Kraft nur dann angewendet, wenn eine entsprechende Belastung des elektrischen Motors vorliegt, die verringert werden soll. Gemäß der Erfindung wird somit diese zusätzliche Kraft durch Änderung des Blattwinkels dazu verwendet, die Belastung des elektrischen Motors unterhalb eines Grenzwertes bzw. unterhalb einer Grenzwertkennlinie zu drücken bzw. zu halten.

Vorzugsweise wird die Reduktion der Leistung der Windenergieanlage durch Verringerung eines Moments eines Generators hervorgerufen. Der Generator ist typischerweise im Maschinenhaus am Rotor angeflanscht bzw. an der Welle des Rotors, und über ein Getriebe oder ohne Getriebe verbunden. Der Generator dient zur Erzeugung elektrischer Energie. Vorzugsweise ist ein Asynchrongenerator vorgesehen.

Die Strommessvorrichtung misst beispielsweise den Strom, der im elektrischen Motor fließt oder der zu dem elektrischen Motor fließt.

Erfindungsgemäß ist die erste vorgebbare Belastungsgrenze eine Kennlinie von Belastungswerten, die unterhalb der Auslösekennlinie eines Motorschutzschalters des elektrischen Motors liegt. Die Auslösekennlinie des Motorschutzschalters ist beispielsweise eine Kennlinie in einem Zeit-Stromdiagramm. Die Auslösekennlinie wird erreicht bzw. überschritten, wenn über eine gewisse Zeit ein entsprechender Strom geflossen ist. Es wird also eine Art eines integralen Stromwertes verwendet, bei dem ein Integral aus einem bewerteten Strom, der über eine entsprechende Zeit fließt, gebildet wird. Die Kennlinie bildet dabei in etwa die Erwärmung des Motors anhand des durch den Motor fließenden Stromes nach. Der Motorschutzschalter kann auch ein Motorschutzrelais sein, das genau auf die Motortemperatur reagiert. Es kann beispielsweise auch ein Temperatursensor vorgesehen sein, der dann das Motorschutzrelais schaltet. So kann beispielsweise ein Motorschutzrelais TeSys vom Typ LRD12 der Firma Telemechanique Verwendung finden, das beispielsweise auf 4 A eingestellt ist und damit beispielsweise bei einer symmetrischen dreipoligen Belastung aus betriebswarmem Zustand bei einem Strom von 2 A nach ca. 30 s und/oder bei 8 A nach ca. 15 s auslöst. Bei einer symmetrischen dreipoligen Belastung aus kaltem Zustand würde der Motorschutzschalter dann nach ca. 1 min auslösen.

Vorzugsweise ist die Kennlinie des Belastungswertes der ersten vorgebbaren Belastungsgrenze ca. 70 % bis 95 % 1 von der Kennlinie des Motorschutzschalters (also 5 % bis 30 % unterhalb) und insbesondere 80 % bis 90 % von der Kennlinie des Motorschutzschalters. Es wird also für die Belastungsgrenze eine Kennlinie nachgebildet, die unterhalb der Kennlinie des Motorschutzschalters liegt, so dass die Belastung des Motors rechtzeitig vor dem Auslösen des Motorschutzschalters reduziert wird.

Vorzugsweise wird bei Erreichen der ersten Belastungsgrenze oder einer zweiten Belastungsgrenze, die insbesondere oberhalb der ersten Belastungsgrenze liegt, die Bewegung des bewegbaren Teils durch den Motor für eine vorgebbare Zeit unterbrochen. Vorzugsweise liegt auch die zweite Belastungsgrenze unterhalb der Kennlinie des Motorschutzschalters, die zur Auslösung des Motorschutzschalters führt.

Vorzugsweise ist eine Vorrichtung zur, insbesondere automatischen, Wiederinbetriebnahme des elektrischen Motors vor-gesehen, um den Motor nach Auslösen des Motorschutzschalters wieder in Betrieb zu nehmen. Dieses geschieht vorzugsweise über eine Fernüberwachung. Hierbei kann es sein, dass der Motorschutzschalter funktional ähnlich wie bei einem Wasserkocher bei zu starker Erwärmung des Motors auslöst und sich bei entsprechender Abkühlung wieder zurücksetzt. Bei Auslösung des Motorschutzschalters wird allerdings der Betriebsüberwachung bzw. der Regelvorrichtung der Windenergieanlage ein Signal gesendet, das entweder der Motor zur Veränderung des Azimutwinkels nicht mehr benutzt werden kann oder aber entsprechend ein Pitchwinkelmotor nicht mehr in Betrieb ist.

Der Motorschutzschalter ist vorzugsweise Bestandteil der Sicherheitskette bzw. einer Sicherheitsabschalteinrichtung der Windenergieanlage, so dass das Auslösen des Motorschutzschalters sofort zur Stilllegung der Windenergieanlage führt.

Vorzugsweise ist ein Energieversorgungssystem mit wenigstens einer Windenergieanlage mit den oben beschriebenen erfindungsgemäßen Merkmalen und/oder mit einem Rotor und wenigstens einem winkelverstellbaren Rotorblatt und einem elektrischen Motor, insbesondere einem Asynchronmotor, zur Bewegung eines bewegbaren Teils der Windenergieanlage vorgesehen, wobei die Windenergieanlage außerdem eine Regelvorrichtung aufweist, wobei eine Sicherheitsabschalteinrichtung in der Windenergieanlage vorgesehen ist, in der ein Motorschutzschalter des elektrischen Motors integriert ist, wobei bei Auslösen des Motorschutzschalters die Sicherheitsabschalteinrichtung ein Signal zum Abschalten der Windenergieanlage abgibt und wobei die Windenergieanlage mittels einer räumlich von der Windenergieanlage getrennten Bedieneinrichtung zum Betrieb wieder freigegeben wird oder ist.

Die von der Windenergieanlage (10) getrennte Bedieneinrichtung (42) kann erfindungsgemäß auch den elektrischen Motor wieder frei geben, so dass dieser wieder dafür sorgen kann, dass sich ein bewegbares Teil in der Windenergieanlage bewegt, wie beispielsweise das Maschinenhaus bzw. der Turmkopf oder ein Rotorblatt im Hinblick auf den Einstellwinkel (Pitchwinkel).

Es wird insbesondere Bezug genommen auf die DE 10 2006 034 251 A1, die vollumfänglich in den Offenbarungsgehalt dieser Patentanmeldung aufgenommen sein soll. In der DE 10 2006 034 251 A1 ist ein Verfahren zum Betreiben eine Windenergieanlage offenbart, wobei die Windenergieanlage nach Auslösen eines Abschaltsignals von einer Sicherheitsabschalteinrichtung abgeschaltet wird oder ist, wobei die Windenergieanlage mittels einer von der Windenergieanlage räumlich getrennten Bedieneinrichtung nach einer Sicherheits-abschaltung zum Betrieb freigegeben wird. Es ist nun erfindungsgemäß erkannt worden, dass insbesondere auch die Aufnahme des Motorschutzschalters in die Sicherheitsabschalteinrichtung eine sehr effiziente Maßnahme ist, um die Sicherheit der Windenergieanlage zu erhöhen, wobei durch eine Wiederinbetriebnahme mittels einer in DE 10 2006 034 251 A1 beschriebenen, von der Windenergieanlage räumlich getrennten, Bedieneinrichtung ein sicherer und kosteneffizienter Betrieb möglich ist.

Aus diesem Dokument ist auch ein entsprechendes Energieversorgungssystem mit wenigstens einer Windenergieanlage bekannt, das eine von der Windenergieanlage räumlich getrennte Bedieneinrichtung derart aufweist, dass mittels der Bedieneinrichtung die Windenergieanlage nach einer Sicherheitsabschaltung zum Betrieb freigegeben wird oder ist. Erfindungsgemäß ist der Motorschutzschalter des elektrischen Motors in der Sicherheitsabschalteinrichtung vorgesehen, so dass bei Auslösen des Motorschutzschalters die Sicherheitsabschaltung der Windenergieanlage stattfindet.

Alternativ ist vorzugsweise ein Energieversorgungssystem mit wenigstens einer Windenergieanlage, die vorstehend als erfinderisch beschrieben ist und/oder mit wenigstens einer Windenergieanlage mit einem Rotor und wenigstens einem winkelverstellbaren Rotorblatt und einem elektrischen Motor, insbesondere einem Asynchronmotor, zur Bewegung eines bewegbaren Teils der Windenergieanlage vorgesehen, wobei die Windenergieanlage außerdem eine Regelvorrichtung aufweist, wobei ein Motorschutzschalter des elektrischen Motors außerhalb einer Sicherheitsabschalteinrichtung der Windenergieanlage angeordnet ist. Durch das Entfernen des Motorschutzschalters aus der Sicherheitsabschalteinrichtung bzw. Sicherheitskette ist es möglich, auch bei Auslösen des Motorschutzschalters dafür zu sorgen, dass ohne Sicherheitsabschaltung die Windenergieanlage sicher weiterbetrieben werden kann und ggf. auch weiter zur Stromversorgung verwendet werden kann.

Vorzugsweise generiert ein Auslösen des Motorschutzschalters ein Signal, das einer Regelvorrichtung gesendet wird. Vorzugsweise ist die Regelvorrichtung ausgebildet, um zu ermitteln, ob eine Sicherheitsabschaltung der Windenergieanlage notwendig ist.

Nach dem Auslösen des Motorschutzschalters nimmt die Regelvorrichtung dann entsprechende Maßnahmen vor, beispielsweise die Stilllegung der Windenergieanlage, wenn die Leistung der übrigen Motoren zur Verstellung des Pitchwinkels oder des Azimutwinkels nicht mehr ausreicht oder wenn beispielsweise das Maschinenhaus aufgrund der Windrichtung nicht nachgeführt werden muss oder gegebenenfalls kann. Es ist zwar grundsätzlich damit zu rechnen, dass ähnliche Belastungen bei weiteren der Motoren vorherrschen. Es muss allerdings nicht notwendigerweise so sein, dass sämtliche Motorschutzschalter aller Motoren zur Bewegung eines bewegbaren Teils auslösen.

So ist es heutzutage beispielsweise so, dass schon bis zu 8 elektrische Motoren verwendet werden, um das Maschinenhaus im Hinblick auf dessen Azimutwinkel zu verfahren bzw. zu verdrehen. Bei dem Verstellen des Rotorblatts im Pitchwinkel sind ein oder zwei Motoren üblich. Damit ist mit einer Stilllegung der Windenergieanlage sofort in dem Moment zu rechnen, wenn ein Pitchwinkelmotor ausfällt. Wenn ein Azimutwinkelmotor ausfällt, kann möglicherweise die Windenergieanlage noch weiter betrieben werden, beispielsweise wenn die weiteren Motoren ausreichend funktionsfähig sind und keine zu starken Böen vorhanden sind bzw. keine oder nur geringe Winkeländerungen des Maschinenhauses notwendig sind. In diesem Fall kann es sein, dass die Windenergieanlage überhaupt nicht stillgelegt werden muss, da bei Schalten des Motorschutzschalters eines Motors, der zum Verändern eines Azimutwinkels vorgesehen ist, dieser nach Abkühlen des Motors aus der Ferne wieder in Betrieb gesetzt werden kann.

Vorzugsweise wird der elektrische Motor nach Verstreichen einer vorgebbaren Zeit oder bei Unterschreiten einer vorgebbaren Temperatur des elektrischen Motors automatisch, über die Regelvorrichtung oder aus der Ferne über die von der Windenergieanlage getrennte Bedieneinrichtung wieder in Betrieb gesetzt.

Die Aufgabe wird ferner durch ein Verfahren zum Betreiben einer Windenergieanlage mit einem Rotor und wenigstens einem winkelverstellbaren Rotorblatt und einem elektrischen Motor, insbesondere einem Asynchronmotor, und mit einer Regelvorrichtung mit den folgenden Verfahrensschritten gelöst:
- Bewegen eines bewegbaren Teils der Windenergieanlage mit dem elektrischen Motor,
- Messen der Belastung des elektrischen Motors und
- Reduzieren der Belastung des elektrischen Motors, wenn eine erste vorgebbare Belastungsgrenze überschritten wurde, wobei das Reduzieren der Belastung durch eine Reduktion der Drehzahl des Rotors, durch eine Änderung des Blattwinkels des wenigstens einen winkelverstellbaren Rotorblatts und/oder durch eine Reduktion der Leistung der Windenergieanlage geschieht, wobei die Belastung des elektrischen Motors auf einen Wert unterhalb der ersten vorgebbaren Belastungsgrenze geregelt wird, wobei die Belastung über ein Messen der Drehzahl des elektrischen Motors, des in dem oder in den elektrischen Motor fließenden Stroms und/oder des Moments, das auf den elektrischen Motor wirkt oder das der elektrische Motor auf das bewegbare Teil ausübt, gemessen bzw. bestimmt wird.

Vorzugsweise wird vor dem Reduzieren der Belastung des elektrischen Motors der elektrische Motor bei Überschreiten einer dritten vorgebbaren Belastungsgrenze für eine vorgebbare Zeit gestoppt, wobei anschließend die Schritte des Bewegens des bewegbaren Teils mit dem elektrischen Motor, das Messen der Belastung des elektrischen Motors und das Reduzieren der Belastung des elektrischen Motors, wenn die erste vorgebbare Belastungsgrenze überschritten wurde, ausgeführt werden. Hierbei wird dann nach dem Bewegen eines bewegbaren Teils der Windenergieanlage mit dem elektrischen Motor und dem Messen der Belastung des elektrischen Motors zunächst einmal der elektrische Motor gestoppt bzw. nicht mehr mit Energie versorgt und dann nach Wiederinbetriebnahme des Motors, also erneutem Bewegen des bewegbaren Teils der Windenergieanlage mit dem elektrischen Motor und Messen der Belastung des elektrischen Motors gegebenenfalls dann die Reduzierung der Belastung des elektrischen Motors, wenn eine erste vorgebbare Belastungsgrenze überschritten wurde, durchgeführt, wobei das Reduzieren der Belastung durch eine Reduktion der Drehzahl des Rotors, durch eine Änderung des Blattwinkels des wenigstens einen winkelverstellbaren Rotorblatts und/oder durch eine Reduktion der Leistung der Windenergieanlage geschieht.

Vorzugsweise entspricht die erste vorgebbare Belastungsgrenze der dritten vorgebbaren Belastungsgrenze. Die dritte vorgebbare Belastungsgrenze kann allerdings auch unterhalb der ersten vorgebbaren Belastungsgrenze liegen. Hierdurch wird dann sehr effizient eine Überbelastung des elektrischen Motors vermieden. Zum Stoppen des Motors kann der dem Motor zugeführte Strom bzw. die an den Motor angelegte Spannung reduziert werden oder aber auf 0 A bzw. 0 V gesetzt werden.

Vorzugsweise ist das bewegbare Teil ein Maschinenhaus der Windenergieanlage, das auf einem Turm angeordnet ist und dessen Azimutwinkel durch den elektrischen Motor geändert wird, und/oder das bewegbare Teil ist das wenigstens eine winkelverstellbare Rotorblatt, wobei der elektrische Motor den Blattwinkel verstellt. Vorzugsweise geschieht zur Reduktion der Belastung des elektrischen Motors eine, insbesondere periodische, Blattwinkeländerung des wenigstens einen Rotorblatts oder eines anderen Rotorblatts, die eine Kraft auf das bewegbare Teil in Richtung der durch den elektrischen Motor hervorgerufenen Bewegung erzeugt.

Vorzugsweise wird die Reduktion der Leistung der Windenergieanlage durch Verringerung eines Moments eines Generators hervorgerufen.

Erfindungsgemäß ist die vorgebbare erste Belastungsgrenze eine Kennlinie von Belastungswerten, die unterhalb der Auslösekennlinie eines Motorschutzschalters des elektrischen Motors liegt.

Vorzugsweise wird bei Erreichen der ersten Belastungsgrenze oder einer zweiten Belastungsgrenze, die insbesondere oberhalb der ersten Belastungsgrenze liegt, die Bewegung durch den Motor für eine vorgebbare Zeit unterbrochen. Hierbei liegt die Erkenntnis zugrunde, dass ein kurzzeitiges Nichtbewegen des Motors in fast allen Betriebssituationen keine bis kaum eine erhöhte Belastung für die Windenergieanlage bedingt.

Vorzugsweise weist der elektrische Motor einen Motorschutzschalter auf, der in einer Sicherheitsabschalteinrichtung integriert ist, wobei bei Auslösen des Motorschutzschalters die Sicherheitsabschalteinrichtung ein Signal zum Abschalten der Windenergieanlage abgibt, worauf die Windenergieanlage abgeschaltet wird oder ist, wobei die Windenergieanlage mittels einer von der Windenergieanlage räumlich getrennten Bedieneinrichtung nach dem Abschalten zum Betrieb freigegeben wird.

Vorzugsweise weist der elektrische Motor einen Motorschutzschalter auf, der außerhalb einer Sicherheitsschalteinrichtung der Windenergieanlage angeordnet ist, wobei bei Auslösen des Motorschutzschalters ein Signal generiert wird, das einer Regelvorrichtung gesendet wird.

Vorzugsweise ermittelt die Regelvorrichtung, ob eine Sicherheitsabschaltung der Windenergieanlage notwendig ist, wobei eine Sicherheitsabschaltung vorgenommen wird, falls diese als notwendig ermittelt wurde.

Ferner vorzugsweise wird der elektrische Motor nach Verstreichen einer vorgebbaren Zeit oder bei Unterschreiten einer vorgebbaren Temperatur automatisch, über die Regelvorrichtung oder aus der Ferne über die von der Windenergieanlage getrennte Bedieneinrichtung wieder in Betrieb gesetzt.

Vorzugsweise wird für den Fall des Auslösens des Motorschutzschalters der Motor, insbesondere automatisch, nach einem vorgebbaren Kriterium wieder in Betrieb genommen. Das Kriterium für die Wiederinbetriebnahme ist vorzugsweise das Verstreichen einer vorgebbaren Zeitdauer oder das Abkühlen des Motors, so dass der Motorschutzschalter sich wieder einschaltet.

Das Kriterium für eine Wiederinbetriebnahme kann auch eine absolut nötige Bewegung des bewegbaren Teils sein, um sicherheitsrelevante Bewegungen vorzunehmen, die eine Zerstörung der weiteren Windenergieanlage verhindern. Ein weiteres Kriterium kann es sein, dass der Betrieb der Windenergieanlage von der Regelvorrichtung bzw. der Betriebsführung nicht durch das Ausschalten des Motors bzw. das Auslösen des Motorschutzschalters beendet wurde, da beispielsweise eine Azimutnachführung während des Ausgeschaltetsein des Motors nicht notwendig war und auch ansonsten kein Sensor ein Signal generiert, das eine mangelnde Funktionsfähigkeit des durch den Motorschutzschalter vorher ausgeschalteten Motors anzeigt.

In diesem Fall kann beispielsweise der elektrische Motor auch aus der Ferne wieder eingeschaltet bzw. zugeschaltet werden, so dass dieser auch wieder entsprechend von der Regelvorrichtung in Betrieb genommen wird. Alternativ kann sich der Motor nach entsprechender Abkühlung und Einschalten des Motorschutzschalters selbsttätig in Betrieb nehmen, ohne ein gesondertes Startsignal von der Regelvorrichtung zu erhalten.

Das Einschalten des Motorschutzschalters geschieht hierbei automatisch bei Abkühlung oder nach einer entsprechenden Zeit, die vorgebbar sein kann, so dass bei Anliegen einer entsprechenden Spannung und einem entsprechenden Steuersignal der Regelvorrichtung der Motor in Betrieb gesetzt wird. Das anliegende Steuersignal kann hierbei auch während der Zeit, in der der Motor abgeschaltet war, angelegen haben, so dass kein gesondertes Startsignal von der Regelvorrichtung nötig ist, damit der Motor wieder in Betrieb genommen wird.

Vorzugsweise ist eine Windenergieanlagevorgesehen, die einen Rotor, wenigstens ein winkelverstellbares Rotorblatt und wenigstens einen elektrischen Motor aufweist, wobei der elektrische Motor zur Nachführung einer Gondel auf einem Turm der Windenergieanlage vorgesehen ist.

Die Windenergieanlage, die entsprechend den vorstehenden bzw. wie die erfindungsgemäßen und/oder bevorzugten Windenergieanlagen ausgebildet ist, weist das Merkmal auf, dass ein Strom, der in dem wenigstens einen elektrischen Motor fließt, als Eingangssignal für einen Regler vorgesehen ist, der zur, insbesondere zyklischen, Einstellung eines Winkels des wenigstens einen winkelverstellbaren Rotorblatts vorgesehen ist. Damit dient vorzugsweise ein Stromsignal des Azimutantriebs als Eingang eines Pitchreglers.

Vorzugsweise dient die Summe der Ströme, die in mehreren elektrischen Motoren fließen, die zur Nachführung der Gondel dienen, als Strom, der als Eingangssignal für einen Regler zur insbesonderen zyklischen Einstellung eines Winkels des wenigstens einen winkelverstellbaren Rotorblatts dient.

Die Erfindung ist insbesondere für die Verstellung des Azimutwinkels des Maschinenhauses geeignet, da insbesondere dort die verwendeten elektrischen Motoren extrem hohen Belastungen ausgesetzt sind, beispielsweise bei turbulenten Winden. Turbulente Winde führen nämlich bei den Motoren, die für die Verstellung des Blattwinkels nötig sind, nicht notwendigerweise zu größeren Kräften, sondern eher zu einer Dauerbelastung der Blattwinkelverstellmotoren. Dahingegen sind die Kräfte, die bei turbulenten Winden auf die Motoren wirken, die den Azimutwinkel des Maschinenhauses verstellen sollen, extrem viel höher. Gerade bei diesen Motoren eignet sich die Erfindung besonders, da durch die Erfindung deutlich kleinbauendere Motoren Verwendung finden können, da durch die Erfindung die Belastung deutlich minimiert wird.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer üblichen Windenergieanlage,
- Fig. 2: eine schematische dreidimensionale Darstellung eines Azimutwinkelnachführungssystems,
- Fig. 3: eine schematische Darstellung eines Teils einer erfindungsgemäßen Windenergieanlage,
- Fig. 4: eine schematische Darstellung eines Kurvenverlaufs des Blattwinkels von drei Rotorblättern über der Zeit,
- Fig. 5: eine Kurve des hieraus resultierenden Turmtorsionsmoments in kNm über der Zeit,
- Fig. 6: einen Kurvenverlauf, der Blattwinkel von drei Rotorblättern bei zyklischer Blattverstellung gemäß der Erfindung und
- Fig. 7: einen schematischen Kurvenverlauf eines aus der zyklischen Blattverstellung aus Fig. 6 resultierenden Turmtorsionsmoments in kNm über der Zeit.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

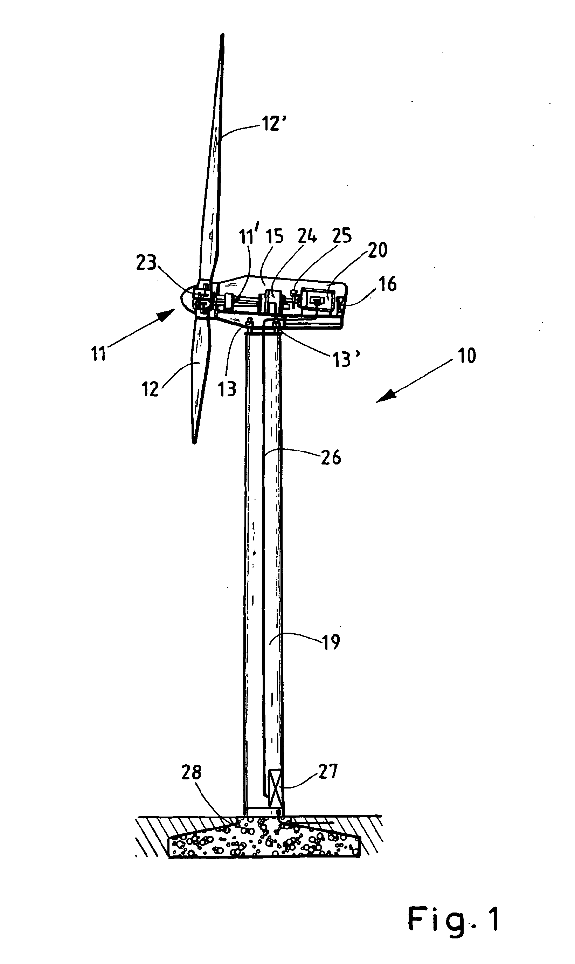

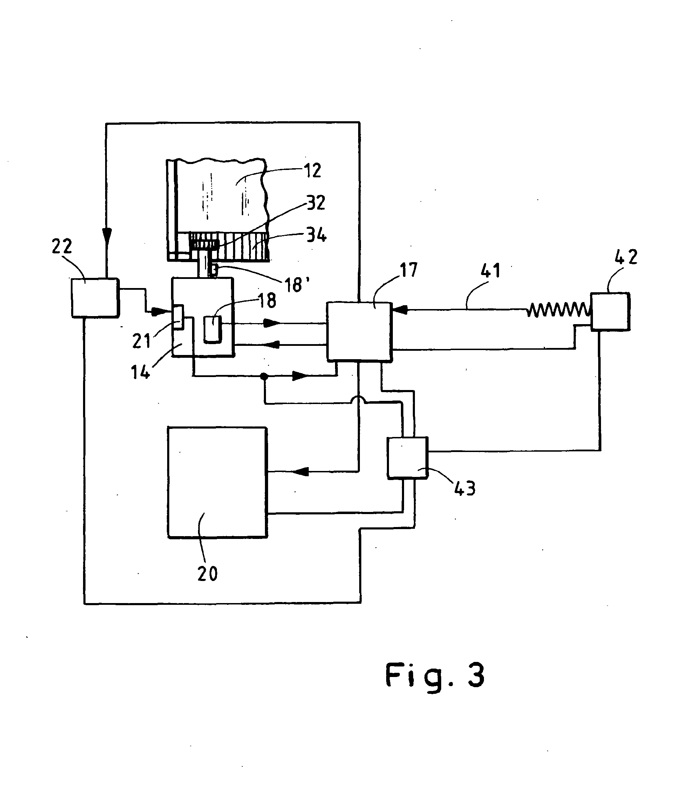

Fig. 1 zeigt eine schematische Darstellung einer Windenergieanlage 10. Die Windenergieanlage 10 weist einen Rotor 11 bzw. eine Rotorwelle 11 auf, an dem üblicherweise drei Rotorblätter 12, 12` angeordnet sind, von denen in Fig. 1 nur zwei dargestellt sind. Die Rotorblätter 12, 12' sind von deren Blattwinkel her verstellbar. Der Blattwinkel wird üblicherweise auch als Pitchwinkel bezeichnet. Hierzu dienen üblicherweise elektrische Motoren bzw. wenigstens ein Motor je Rotorblatt 12, 12', die allerdings in Fig. 1 nicht dargestellt sind. Der Motor 14 aus Fig. 3 könnte beispielsweise ein derartiger Blattwinkelverstellmotor sein. Pro Rotorblatt 12, 12' können auch zwei oder mehr elektrische Motoren zum Verstellen des Blattwinkels vorgesehen sein.

Das Verstellen des Blattwinkels dient dazu, Leistung, die durch den auf die Windenergieanlage wirkenden Wind zur Verfügung gestellt wird, optimal durch das Rotorblatt abzugreifen. Außerdem dient die Blattwinkelverstellung dazu, aufgenommene Leistung und damit auch die Belastung der Windenergieanlage bei hohen Windgeschwindigkeiten zu verringern.

Die Windenergie wird über die Rotorblatter 12, 12' in eine Rotation des Rotors 11 umgewandelt. Über ein Getriebe 24 wird ein Generator 20 angetrieben, der über ein Leistungskabel 26, das durch den Turm 19 geführt wird, zu einem elektrischen Anschluss 27 verbracht wird. Dort findet eine Transformation in eine Hochspannung statt, die dann in ein Netz gespeist werden kann. Der Turm 19 ist auf einem Fundament 28 gegründet und trägt im oberen Bereich das Maschinenhaus 15, das die entsprechenden der gestellten Komponenten aufweist. Es kann auch eine Windenergieanlage 10 vorgesehen sein, die getriebelos ist. Ferner ist üblicherweise auch eine Rotorbremse 25 an der schnellen Welle zwischen Getriebe 24 und Generator 20 vorgesehen. Im Maschinenhaus 15 ist außerdem eine Regelvorrichtung 16 vorgesehen, die die Windenergieanlage 10 regelt und/oder steuert.

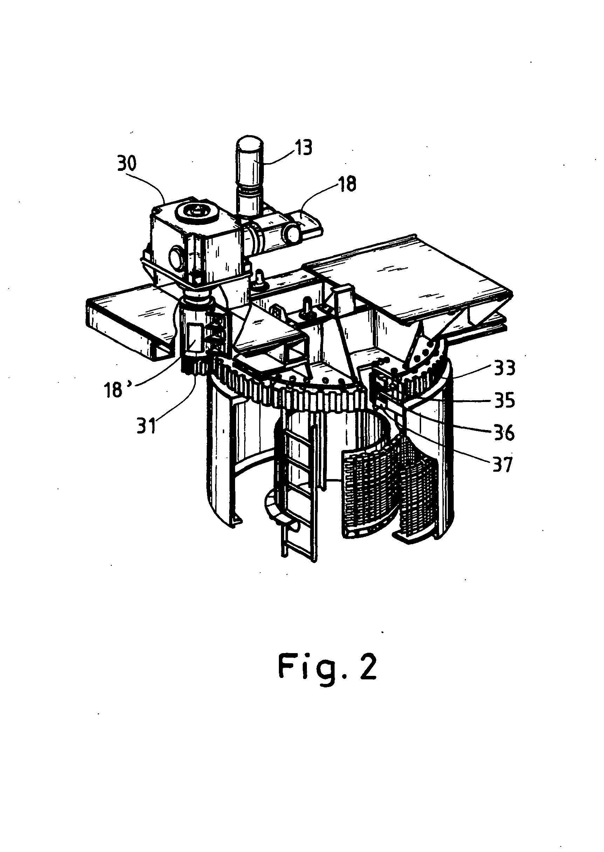

Das Maschinenhaus 15 ist über elektrische Motoren 13, 13' der Windrichtung nachführbar. Ein Beispiel für eine entsprechende Windrichtungsnachführung des Maschinenhauses 15 ist in Fig. 2 schematisch dreidimensional dargestellt. In Fig. 2 ist nur ein elektrischer Motor 13 dargestellt. In Fig. 1 sind zwei elektrische Motoren 13, 13' gezeigt. In modernen 2 MW bis 5 MW Windenergieanlagen werden bis zu acht elektrische Motoren für die Azimutnachführung des Maschinenhauses bzw. Windrichtungsnachführung verwendet.

Eine Windrichtungsnachführung des Maschinenhauses 15 findet statt, um zum einen Belastungen der Windenergieanlage 10 aufgrund schräger Anströmung mit Wind zu vermindern und außerdem die Energieausbeute zu erhöhen, da die maximale Energieausbeute aus einem vorgegebenen Wind dann erzielt werden kann, wenn die Windenergieanlage frontal vom Wind angeströmt wird. Da Windrichtungsänderungen relativ häufig auch kurzfristig auftreten, wird bei beispielsweise Windrichtungsänderungen von bis zu 15° mehrere Minuten die Windrichtungsänderung integriert und erst bei nachhaltigen Windrichtungsänderungen auch der Azimutwinkel des Maschinenhauses nachgeführt. Die Nachführgeschwindigkeit liegt üblicherweise in einem Bereich von 0,1°/s bis 0,5°/s, vorzugsweise bei 0,3°/s. Bei starken Windrichtungsänderungen von bis zu 40° oder 50° wird nicht mehrere Minuten mit dem Nachführen gewartet, sondern sofort nachgeführt. Bei turbulenten Winden kann es zu sehr hohen Belastungen der Windenergieanlage führen und auch sehr hohe azimutale Kräfte auf das Maschinenhaus wirken, die zu einer starken Belastung der elektrischen Motoren 13, 13' und des Getriebes 30 der elektrischen Motoren 13, 13' führen kann.

In Fig. 2 ist, wie erwähnt, schematisch eine dreidimensionale Darstellung eines Nachführungssystems des Azimutwinkels des Maschinenhauses 15 dargestellt. Ein Motor 13 ist über ein Getriebe 30 und über ein Ritzel 31 mit einem Zahnkranz 33 in Wirkverbindung. Die Übersetzung des Getriebes liegt im Bereich von 1:100 bis 1:400, so dass das Ritzel 31 mit einem Faktor von 1 :100 bis 1:400 der Drehgeschwindigkeit sich im Verhältnis zum Motor dreht. Hierdurch wird das Maschinenhaus 15 in dessen Azimutwinkel über eine Drehung am Azimutlager verändert.

Zur Sicherung des Maschinenhauses 15 gegen ungewollte Verdrehungen durch auf das Maschinenhaus wirkende Kräfte ist ein Bremsring 36 mit Bremsen 37 vorgesehen. Die Bremsen 37, die in Wirkverbindung mit dem Bremsring 36 gesetzt werden können, dienen auch dazu, bei der Azimutwinkelverstellung bzw. Maschinenhausnachführung Schwingungen zu vermeiden.

Am Motor 13 ist eine Messvorrichtung 19 vorgesehen, die beispielsweise die Drehzahl des Motors 13 misst. Eine Regelvorrichtung, die in Fig. 1 mit beispielsweise 16 angegeben ist, und in Fig. 3 mit 17, kann nun eine Solldrehzahl mit der tatsächlich gemessenen Ist-Drehzahl vergleichen. Bei Überschreiten einer vorgebbaren Drehzahldifferenz wird von einer entsprechenden Belastung des elektrischen Motors ausgegangen, und es kommt zu einer erfindungsgemäßen Reduktion der Belastung des elektrischen Motors durch entsprechende Regeleingriffe, die vorstehend beschrieben wurden. Entsprechend kann die Messvorrichtung 18 auch dazu dienen, den Strom, der im Motor fließt oder zum Motor geführt wird, zu messen. Ab Überschreiten eines vorgebbaren gemessenen Stromwertes wird auch vom Erreichen einer Belastungsgrenze ausgegangen, so dass ein Regeleingriff stattfindet, der zur Reduktion der Belastung des elektrischen Motors führt. Es könnte auch alternativ oder zusätzlich eine Motortemperatur gemessen werden und ein Regeleingriff ab Erreichen einer vorgebbaren Temperatur durchgeführt werden.

Die Messvorrichtung 18' kann beispielsweise dazu dienen, die Drehzahl des Ritzels 31 zu bestimmen. Entsprechend kann auch hier eine Differenz zwischen einem Sollwert der Drehzahl und einem Ist-Wert gebildet werden und bei einer entsprechenden Differenz von dem Erreichen einer ersten Belastungsgrenze oder einer zweiten Belastungsgrenze des elektrischen Motors ausgegangen werden. Schließlich ist es auch möglich, mit den Messvorrichtungen 18 bzw. 18' beispielsweise das Drehmoment des Motors 13 bzw. des Ritzels 31 zu bestimmen und ab Überschreiten eines entsprechenden Drehmomentes wird die Regelvorrichtung dann entsprechend die Belastung des elektrischen Motors 13 durch entsprechende Eingriffe, die vorstehend beschrieben wurden, verringern.

Durch die erfindungsgemäßen Maßnahmen ist es möglich, die elektrischen Motoren 13, 13', 14, die zur Bewegung von bewegbaren Teilen einer Windenergieanlage verwendet werden und insbesondere die Azimutantriebe kleiner auszulegen als dieses bisher möglich war. Entsprechend schon konstruierte Windenergieanlagen können mit der Erfindung in schwierigeren Windzonen, beispielsweise bei sehr stark böigen Winden und turbulenten Winden, betrieben werden.

Fig. 3 zeigt eine schematische Darstellung eines Teils einer erfindungsgemäßen Windenergieanlage, wobei in diesem Beispiel ein Rotorblatt 12 über einen Zahnkranz 34 und ein entsprechendes Ritzel 32 in dessen Rotorblattwinkel verdreht wird. Bei dem Rotorblattwinkel handelt es sich um einen Drehwinkel um eine Längsachse des Rotorblattes.

Auch in diesem Ausführungsbeispiel gemäß Fig. 3 sind eine Messvorrichtung 18 und eine Messvorrichtung 18' dargestellt, wobei die Messvorrichtung 18 beispielsweise einen Stromwert im Motor 14 misst und diesen Wert der Regelvorrichtung 17 zuführt. Die Regelvorrichtung 17 kann dann entsprechend, insbesondere regelnd, den Motor 14 ausschalten.

Sowohl in diesem Ausführungsbeispiel gemäß Fig. 3 bei Vorsehen einer Messvorrichtung 18, die einen Stromwert im Motor oder einen Stromwert, der dem Motor zugeführt wird, misst, wobei der Motor der Motor ist, der den Blattwinkel verstellt, oder aber auch der Motor ist, der den Azimutwinkel verstellt, können die gemessen Stromwerte in der Regelvorrichtung so verarbeitet werden, dass diese mit einer Kennlinie verglichen werden. Die Stromwerte können beispielsweise in der Regelvorrichtung 16, 17 über die Zeit integriert werden, wobei die Zeitdauer in Abhängigkeit der Höhe des Stroms unterschiedlich sein kann, so dass eine Kennlinie nachgebildet wird, die einer Kennlinie eines Motorschutzschalters entspricht, allerdings darunter liegt. Hierdurch kann dann sehr effizient das Auslösen des Motorschutzschalters verhindert werden.

Erfindungsgemäß kann auch das Drehmoment, das von dem Generator 20 erzeugt wird, verringert werden, um die Belastung des Motors 14 zu reduzieren. Sollte es zu einem Ausschalten des Motors beispielsweise über eine Motorschutzschaltung 21 kommen, wird ein entsprechendes Signal der Regelvorrichtung 17 zugeführt und die Windenergieanlage kann dann beispielsweise außer Betrieb gesetzt werden. Für den Fall, dass es sich bei dem durch den Motor 14 angetriebenen bewegbaren Teil nicht wie in Fig. 3 um ein Rotorblatt 12, sondern um das Maschinenhaus 15 handelt, kann es Sinn machen, dass die Regelvorrichtung 17 die Windenergieanlage nicht stilllegt, sondern diese weiter in Betrieb hält, um darauf zu warten, dass die Betriebstemperatur des Motors 14 wieder gesunken ist, so dass entweder über eine Anschaltvorrichtung 22, die durch die Regelvorrichtung 17 angesteuert werden kann, die Motorschutzschaltung 21 wieder eingeschaltet wird und der Motor 14 wieder in Betrieb genommen wird oder aber über die Ferne die Regelvorrichtung 17 ein entsprechendes Signal erhält, dass die Motorschutzschaltung 21 wieder eingeschaltet wird. Der Zugriff aus der Ferne ist durch den Pfeil 41 angedeutet.

Die Motorschutzschaltung 21 kann auch so ausgestaltet sein, dass diese nach Abkühlen selbsttätig sich einschaltet und der Motor 14 in Betrieb gesetzt wird, wenn ein entsprechendes Signal für einen Betrieb des Motors 14 von der Regelvorrichtung 17 anliegt. Die Regelvorrichtung 17 kann beispielsweise auch während des Ausgeschaltetseins des Motors 14 dauerhaft einen Regel- bzw. Steuerbefehl an den Motor 14 senden, dass dieser eine Bewegung ausführen soll. Es kann allerdings auch sein, dass erst nach Wiedereinschalten der Motorschutzschaltung 21 ein entsprechendes Signal an die Regelvorrichtung 17 gesendet wird, die daraufhin dann eine Bewegungsaufforderung des Motors 14 sendet, wenn beispielsweise der Blattwinkel geändert werden soll oder aber eine Azimutnachführung des Maschinenhauses 15 durchgeführt werden soll.

Zusätzlich ist in Fig. 3 noch die optionale Variante dargestellt, in der eine von der Windenergieanlage getrennte Bedieneinrichtung 42 vorgesehen ist, Es wird hierzu auch insbesondere Bezug genommen auf die DE 10 2006 034 251 A1, die vollumfänglich in Bezug genommen sein soll. Insbesondere das Ausführungsbeispiel, das in Fig. 2 der oben genannten Patentanmeldung beschrieben ist und die dazugehörige Figurenbeschreibung soll vollumfänglich in diese Patentanmeldung aufgenommen sein.

Es ist in Fig. 3 nun eine Sicherheitsabschalteinrichtung 43 optional vorgesehen, die mit dem Motorschutzschalter 21 verbunden ist. Sobald der Motorschutzschalter 21 auslöst, kann vorgesehen sein, dass die Sicherheitsabschaltvorrichtung 43 die Sicherheitsabschaltung der Windenergieanlage vorsieht. Entsprechend wird ein Sicherheitsabschaltsignal von der Sicherheitsabschalteinrichtung 43 an die Bedieneinrichtung 42 gesendet. Bei Wiedereinschalten der Windenergieanlage wird ein entsprechendes Sperrsignal in der Sicherheitsabschalteinrichtung 43 von beispielsweise der Bedieneinrichtung 42 aufgehoben. Die Aufhebung des Sperrsignals wird beispielsweise dann der Regelvorrichtung 17 und der Einschaltvorrichtung 22 übermittelt. Auch der Generator 20 ist mit der Sicherheitsabschalteinrichtung 43 verbunden, wenn beispielsweise dort ein sicherheitsrelevanter Vorgang auftritt, der eine Sicherheitsabschaltung verlangt. In diesem Fall wird ein entsprechendes Signal der Sicherheitsabschalteinrichtung 43 übermittelt. Die Sicherheitsabschalteinrichtung 43 ist hier nur schematisch dargestellt. Es handelt sich an sich um eine Hardwarekette bzw. Sicherheitskette von in Reihe geschalteten Schaltern (vgl. hierzu Fig. 3 der DE 10 2006 034 251 A1 und die dazugehörige Beschreibung). Sobald ein Schalter auslöst bzw. geöffnet ist, wird ein Signal generiert, das zur Sicherheitsabschaltung der Windenergieanlage führt.

Erfindungsgemäß kann es auch vorgesehen sein, dass eine Verbindung zwischen dem Motorschutzschalter 21 und der Sicherheitsabschalteinrichtung 43 nicht existiert, so dass ein Auslösen des Motorschutzschalters 21 nicht notwendigerweise zu einer Sicherheitsabschaltung der Windenergieanlage führt. In diesem Fall kann die Regelvorrichtung 17 bzw. eine Bedienperson, die an der Bedieneinrichtung 42 die Windenergieanlage überwacht, entscheiden, ob eine Sicherheitsabschaltung notwendig wird.

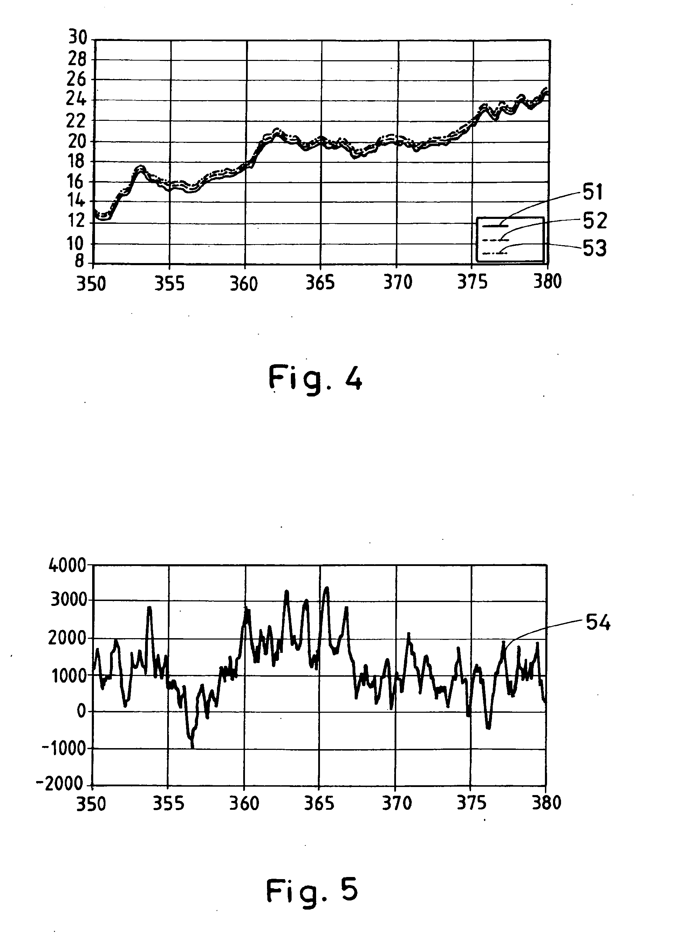

Fig. 4 zeigt in einem Diagramm den Verlauf der Blattwinkel von drei Rotorblättern über der Zeit in Sekunden. Diese sind mit verschieden dargestellten Kurven 51, 52 und 53 dargestellt. Hierbei wird kollektiv eine Blattverstellung durchgeführt. Die entsprechend konstanten Anstellwinkeldifferenzen können als Fertigungstoleranzen, die in der Simulation berücksichtigt wurden, zu verstehen sein. Dargestellt ist der jeweilige Winkel in Grad über der Zeit in sec.

Fig. 5 zeigt hierzu (Fig.4) den Kurvenverlauf des Turmtorsionsmomentes in kNm über der Zeit. Auch hier ist die Zeit in sec. dargestellt. Es ist zu erkennen, dass es durch die kollektive Rotorblattverstellung zu hohen Belastungen der Windenergieanlage kommt.

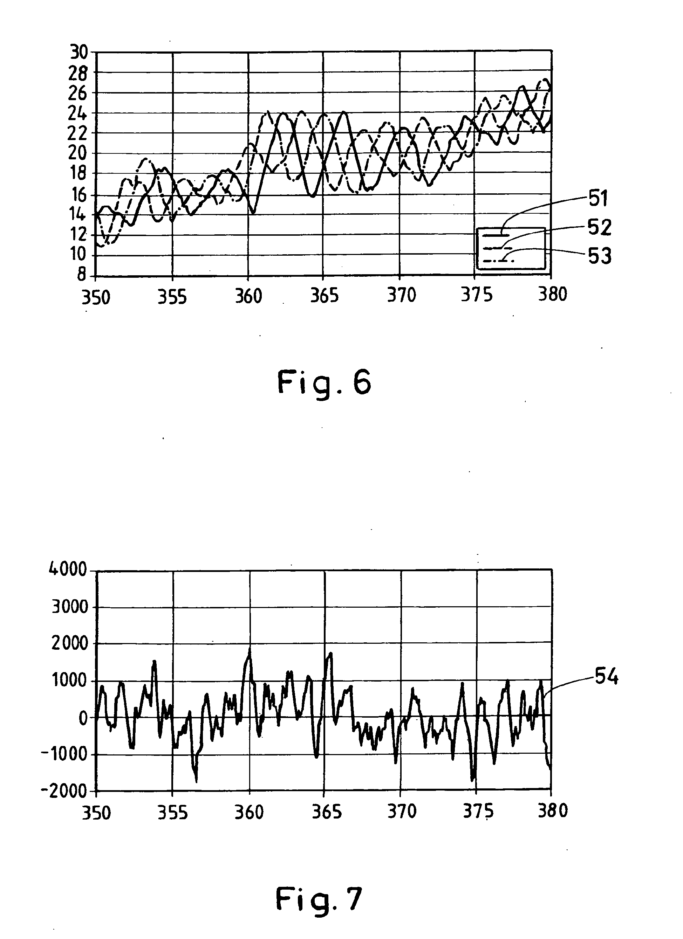

Demgegenüber wird in Fig. 6 erfindungsgemäß eine zyklische Rotorblattverstellung durchgeführt, bei der der gemessene Strom der Motoren der Antriebe der Gondelnachführung, also der Azimutantriebe, als Einganggröße für den oder die Regler für die Blattverstellung dient. Insbesondere findet eine geregelte und zyklische Blattverstellung statt. Hierbei kann der gemessene Strom in einem Motor Verwendung finden oder die Summe der gemessen Ströme mehrerer Motoren oder ein Mittelwert der gemessenen Ströme. Der Mittelwert kann auch aus gewichteten gemessenen Strömen gebildet werden, um eine höhere Belastung eines Motors bspw. Höher zu bewerten. Durch die Verwendung des Stroms wenigstens eines Motors zur Gondelnachführung bei sich beispielsweise ändernden Windrichtungen wird die Belastung der Windenergieanlage, wie Fig. 7 zeigt, deutlich reduziert.

In Fig. 7 ist auch das Turmtorsionsmoment, insbesondere das Turmkopftorsionsmoment in kNm über der Zeit, dargestellt. Es ist zu erkennen, dass dieses sich deutlich reduziert. Im Vergleich zur Extrembelastung aus Fig. 5 von ca. 3450 kNm beträgt die maximale Belastung in Fig. 7 nur noch ca. 1900 kNm. Genaues Auswerten ergibt eine Reduzierung der Maximalbelastung von 38%. Die Betriebsfestigkeitslasten wurden um 6 % reduziert, was im Bereich von Windenergieanlagen ein erheblicher Wert ist. Optisch ist dies daran zu erkennen, dass die Belastung der Fig. 7 wesentlich symmetrischer und mit geringeren Schwankungen zur X-Achse verläuft als in der Fig. 5.

Durch Verwendung des Stroms in den Motoren als Eingangsgröße für den Regler wird ein Eingangswert verwendet, der sehr einfach zu erfassen und zu messen ist. Vorzugsweise wird die Differenz des gemessenen Stroms zu einem vorgebbaren maximalen Strom als Eingangsgröße verwendet. Vorzugsweise wird die zyklische Blattverstellung zur Unterstützung des Azimutantriebs nur zugeschaltet bzw. verwendet, wenn eine vorgebbare Messgröße einer Antriebsbelastung einen weiteren vorgebbaren Grenzwert überschreitet. Auf diese Weise wird die Energieertragsverminderung durch das zyklische Pitchen, z.B. unterhalb der Nennwindgeschwindigkeit, minimiert. Mit diesem Verfahren wird im Ergebnis der Strom der Azimutantriebe durch zyklisches Pitchen geregelt und/oder begrenzt.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Windenergieanlage
- 11: Rotor
- 11': Rotorwelle
- 12, 12': Rotorblatt
- 13, 13': Motor
- 14: Motor
- 15: Maschinenhaus
- 16: Regelvorrichtung
- 17: Regelvorrichtung
- 18, 18': Messvorrichtung
- 19: Turm
- 20: Generator
- 21: Motorschutzschaltung
- 22: Anschaltvorrichtung
- 23: Rotornabe
- 24: Getriebe
- 25: Rotorbremse
- 26: Leistungskabel
- 27: elektrischer Anschluss
- 28: Fundament
- 30: Getriebe
- 31: Ritzel
- 32: Ritzel
- 33: Zahnkranz
- 34: Zahnkranz
- 35: Azimutlager
- 36: Bremsring
- 37: Bremse
- 41: Zugriff aus der Ferne
- 42: Bedieneinrichtung
- 43: Sicherheitsabschalteinrichtung
- 51: Kurve Blattwinkel des 1. Rotorblatts
- 52: Kurve Blattwinkel des 2. Rotorblatts
- 53: Kurve Blattwinkel des 3. Rotorblatts
- 54: Turmtorsionsmoment [kNm]

## Patentansprüche

1. Windenergieanlage (10) mit einem Rotor (11) und wenigstens einem winkelverstellbaren Rotorblatt (12, 12') und einem elektrischen Motor (13, 14), insbesondere einem Asynchronmotor, zur Bewegung eines bewegbaren Teils (12, 15) der Windenergieanlage (10), wobei die Windenergieanlage (10) außerdem eine Regelvorrichtung (16, 17) aufweist, **dadurch gekennzeichnet, dass** eine Messvorrichtung (18) zur Bestimmung der Belastung des elektrischen Motors (13, 14) vorgesehen ist, wobei die Regelvorrichtung (16, 17) bei Überschreiten einer vorgebbaren ersten Belastungsgrenze des elektrischen Motors (13, 14) die Belastung des Motors (13, 14) durch Reduktion der Drehzahl des Rotors (11), durch Änderung des Blattwinkels des wenigstens einen Rotorblatts (12, 12') und/oder durch Reduktion der Leistung der Windenergieanlage (10) reduziert, wobei die Belastung des elektrischen Motors (13, 14) auf einen Wert unterhalb der vorgebbaren ersten Belastungsgrenze geregelt wird, wobei die Messvorrichtung (18) eine Drehzahlmessvorrichtung des elektrischen Motors (13, 14), eine Strommessvorrichtung für den Strom, der in dem oder in den elektrischen Motor (13, 14) fließt und/oder eine Drehmomentmessvorrichtung zur Messung des Moments, das auf den elektrischen Motor (13, 14) wirkt bzw. das der elektrische Motor (13, 14) auf das bewegbare Teil (12, 15) ausübt, ist, wobei die vorgebbare erste Belastungsgrenze eine Kennlinie von Belastungswerten ist, die unterhalb der Auslösekennlinie eines Motorschutzschalters (21) des elektrischen Motors (13, 14) liegt.

2. Windenergieanlage (10) nach Anspruch 1, **dadurch gekennzeichnet, dass** das bewegbare Teil (12, 15) ein Maschinenhaus (15) der Windenergieanlage (10) ist, das auf einem Turm (19) angeordnet ist und dessen Azimutwinkel durch den elektrischen Motor (13) änderbar ist und/oder dass das bewegbare Teil (12, 15) das wenigstens eine winkelverstellbare Rotorblatt (12) ist und die Bewegung, die durch den elektrischen Motor (14) hervorgerufen wird, eine Winkelverstellung des Blattwinkels ist, wobei insbesondere zur Reduktion der Belastung des elektrischen Motors (13, 14) eine, insbesondere periodische, Blattwinkeländerung des wenigstens einen Rotorblatts (12) und/oder eines anderen Rotorblatts (12') geschieht, die eine Kraft auf das bewegbare Teil (12, 15) in eine vorgebbare Bewegungsrichtung hervorruft, wobei insbesondere die Reduktion der Leistung der Windenergieanlage (10) durch Verringerung eines Moments eines Generators (20) hervorgerufen wird.

3. Windenergieanlage (10) nach Anspruch 1 oder 2, **dadurch gekennzeichnet, dass** bei Erreichen der ersten Belastungsgrenze oder einer zweiten Belastungsgrenze, die insbesondere oberhalb der ersten Belastungsgrenze liegt, die Bewegung des bewegbaren Teils (12, 15) durch den Motor (13, 14) für eine vorgebbare Zeit unterbrochen wird, wobei insbesondere eine Vorrichtung (22) zur, insbesondere automatischen, Wiederinbetriebnahme des elektrischen Motors (13, 14) vorgesehen ist, um den Motor (13, 14) nach Auslösen des Motorschutzschalters (21) wieder in Betrieb zu nehmen.

4. Windenergieanlage (10) mit einem Rotor (11) und wenigstens einem winkelverstellbaren Rotorblatt (12, 12') und wenigstens einem elektrischen Motor (13, 14), der zur Nachführung einer Gondel auf einem Turm der Windenergieanlage (10) vorgesehen ist nach einem der Ansprüche 1 bis 3, **dadurch gekennzeichnet, dass** ein Strom, der in den wenigstens einen elektrischen Motor (13, 14) fließt, als Eingangssignal für einen Regler vorgesehen ist, der zur, insbesonderen zyklischen, Einstellung eines Winkels des wenigstens einen winkelverstellbaren Rotorblatts (12, 12') vorgesehen ist.

5. Windenergieanlage (10) nach Anspruch 4, **dadurch gekennzeichnet, dass** der Strom die Summe der Ströme ist, die in mehreren elektrischen Motoren (13, 14) fließen, die zur Nachführung der Gondel dienen.

6. Energieversorgungssystem mit wenigstens einer Windenergieanlage (10) nach einem der Ansprüche 1 bis 5, **dadurch gekennzeichnet, dass** eine Sicherheitsabschalteinrichtung (43) in der Windenergieanlage (10) vorgesehen ist, in der ein Motorschutzschalter (21) des elektrischen Motors (13, 14) integriert ist, wobei bei Auslösen des Motorschutzschalters (21) die Sicherheitsabschalteinrichtung (43) ein Signal zum Abschalten der Windenergieanlage (10) abgibt und wobei die Windenergieanlage (10) mittels einer räumlich von der Windenergieanlage (10) getrennten Bedieneinrichtung (42) zum Betrieb wieder freigegeben wird oder ist.

7. Energieversorgungssystem mit wenigstens einer Windenergieanlage (10) nach einem der Ansprüche 1 bis 6, **dadurch gekennzeichnet, dass** ein Motorschutzschalter (21) des elektrischen Motors (13, 14) außerhalb einer Sicherheitsabschalteinrichtung (43) der Windenergieanlage (10) angeordnet ist, wobei insbesondere ein Auslösen des Motorschutzschalters (21) ein Signal generiert, das einer Regelvorrichtung (16, 17) gesendet wird.

8. Energieversorgungssystem nach einem der Ansprüche 6 oder 7, **dadurch gekennzeichnet, dass** der elektrische Motor (13, 14) nach Verstreichen einer vorgebbaren Zeit oder bei Unterschreiten einer vorgebbaren Temperatur automatisch, über die Regelvorrichtung (16, 17) oder aus der Ferne über die von der Windenergieanlage (10) getrennte Bedieneinrichtung (42) wieder in Betrieb gesetzt wird.

9. Verfahren zum Betreiben einer Windenergieanlage (10) mit einem Rotor (11) und wenigstens einem winkelverstellbaren Rotorblatt (12, 12') und einem elektrischen Motor (13, 14), insbesondere einem Asynchronmotor, und mit einer Regelvorrichtung (16, 17) mit den folgenden Verfahrensschritten:
- Bewegen eines bewegbaren Teils (12, 15) der Windenergieanlage (10) mit dem elektrischen Motor (13, 14),
- Messen der Belastung des elektrischen Motors (13, 14)
und
- Reduzieren der Belastung des elektrischen Motors (13, 14), wenn eine erste vorgebbare Belastungsgrenze überschritten wurde, wobei das Reduzieren der Belastung durch eine Reduktion der Drehzahl des Rotors (11), durch eine Änderung des Blattwinkels des wenigstens einen winkelverstellbaren Rotorblatts (12) und/oder durch eine Reduktion der Leistung der Windenergieanlage (10) geschieht, wobei die Belastung des elektrischen Motors (13, 14) auf einen Wert unterhalb der ersten vorgebbaren Belastungsgrenze geregelt wird, wobei die Belastung über ein Messen der Drehzahl des elektrischen Motors (13, 14), des in dem oder in den elektrischen Motor (13, 14) fließenden Stroms und/oder des Moments, das auf den elektrischen Motor (13, 14) wirkt oder das der elektrische Motor (13, 14) auf das bewegbare Teil (12, 15) ausübt, bestimmt wird, wobei die vorgebbare erste Belastungsgrenze eine Kennlinie von Belastungswerten ist, die unterhalb der Auslösekennlinie eines Motorschutzschalters (21) des elektrischen Motors (13, 14) liegt.

10. Verfahren nach Anspruch 9, **dadurch gekennzeichnet, dass** vor dem Reduzieren der Belastung des elektrischen Motors (13, 14) der elektrische Motor (13, 14) bei Überschreiten einer dritten vorgebbaren Belastungsgrenze für eine vorgebbare Zeit gestoppt wird, wobei anschließend die Schritte des Bewegens des bewegbaren Teils (12, 15) mit dem elektrischen Motor (13, 14), das Messen der Belastung des elektrischen Motors (13, 14) und das Reduzieren der Belastung des elektrischen Motors (13, 14), wenn die erste vorgebbare Belastungsgrenze überschritten wurde, ausgeführt werden, wobei insbesondere die Belastung des elektrischen Motors (13, 14) auf einen Wert unterhalb der vorgebbaren ersten Belastungsgrenze geregelt wird.

11. Verfahren nach Anspruch 9 oder 10, **dadurch gekennzeichnet, dass** das bewegbare Teil (12, 15) ein Maschinenhaus (15) der Windenergieanlage (10) ist, das auf einem Turm (19) angeordnet ist und dessen Azimutwinkel durch den elektrischen Motor (13) geändert wird, und/oder dass das bewegbare Teil (12, 15) das wenigstens eine winkelverstellbare Rotorblatt (12, 12') ist und dass der elektrische Motor (14) den Blattwinkel verstellt, wobei insbesondere zur Reduktion der Belastung des elektrischen Motors (13, 14) eine, insbesondere periodische, Blattwinkeländerung des wenigstens einen Rotorblatts (12) oder eines anderen Rotorblatts (12') geschieht, die eine Kraft auf das bewegbare Teil (12, 15) in Richtung der durch den elektrischen Motor (13, 14) hervorgerufenen Bewegung erzeugt.

12. Verfahren nach einem der Ansprüche 9 bis 11, **dadurch gekennzeichnet, dass** bei Erreichen der ersten Belastungsgrenze oder einer zweiten Belastungsgrenze, die insbesondere oberhalb der ersten Belastungsgrenze liegt, das Bewegen des bewegbaren Teils (12, 15) durch den Motor (13, 14) für eine vorgebbare Zeit unterbrochen wird, wobei insbesondere für den Fall des Auslösens des Motorschutzschalters (21) der Motor (13, 14), insbesondere automatisch, nach einem vorgebbaren Kriterium wieder in Betrieb genommen wird.

13. Verfahren nach einem der Ansprüche 9 bis 12, **dadurch gekennzeichnet, dass** der elektrische Motor (13, 14) einen Motorschutzschalter (21) aufweist, der außerhalb einer Sicherheitsabschalteinrichtung (43) der Windenergieanlage (10) angeordnet ist, wobei bei Auslösen des Motorschutzschalters (21) ein Signal generiert wird, dass einer Regelvorrichtung (16, 17) gesendet wird.

14. Verfahren nach Anspruch 13, **dadurch gekennzeichnet, dass** der elektrische Motor (13, 14) nach Verstreichen einer vorgebbaren Zeit oder bei Unterschreiten einer vorgebbaren Temperatur automatisch, über die Regelvorrichtung (16, 17) oder aus der Ferne über die von der Windenergieanlage (10) getrennte Bedieneinrichtung (42) wieder in Betrieb gesetzt wird.

## Claims

1. A wind turbine (10) with a rotor (11) and at least one angularly adjustable rotor blade (12 ,12') and an electric motor (13, 14), particularly an asynchronous motor, for moving a movable component (12, 15) of the wind turbine (10), wherein the wind turbine (10) further includes a control device (16, 17), **characterised in that** a measuring device (18) is provided for measuring the loading of the electric motor (13, 14), wherein the control device (16, 17) reduces the loading of the motor (13, 14) when a pre-determinable first loading threshold of the electric motor (13, 14) is exceeded by reducing the speed of the motor (13, 14), by altering the blade angle of the at least one rotor blade (12,12') and /or by reducing the output of the wind turbine (10), wherein the loading of the electric motor (13, 14) is controlled to a value below the pre-determinable first loading threshold, wherein the measuring device (18) is a speed measuring device of the electric motor (13, 14), a current measurement device for the current, which flows in the electric motor or motors (13, 14) and/or a torque measuring device for measuring the torque which acts on the electric motor (13, 14) or which the electric motor (13, 14) exerts on the movable component (12, 15), wherein the pre-determinable first loading threshold is a characteristic line of loading values, which lies below the actuation characteristic line of a protective motor switch (21) of the electric motor (13, 14).

2. A wind turbine (10) as claimed in Claim 1, **characterised in that** the movable component (12, 15) is a machine housing (15) of the wind turbine (10), which is arranged on a tower (19) and whose azimuth angle is alterable by the electric motor (13) and/or that the movable component (12, 15) is the at least one angularly adjustable rotor blade (12) and the movement which is caused by the electric motor (14), is an angular movement of the rotor blade, wherein, in particular, in order to reduce the loading of the electric motor (13, 14), a, in particular periodic, change of blade angle of the at least one rotor blade (12) and/or another rotor blade (12') occurs, which results in a force on the moveable component (12, 15) in a pre-determinable direction of movement, wherein, in particular, the reduction in output of the wind turbine (10) is caused by reducing a torque of a generator (20).

3. A wind turbine (10) as claimed in Claim 1 or 2, **characterised in that** on reaching the first loading threshold or a second loading threshold, which lies, in particular,
above the first loading threshold, the movement of the moveable component (12, 15) by the motor (13, 14) is interrupted for a pre-determinable period of time, wherein, in particular, a device (22) for, particularly automatically, restarting the electric motor (13, 14) is provided in order to restart the motor (13, 14) after actuation of the protective motor switch (21).

4. A wind turbine (10) with a rotor (11) and at least one angularly adjustable rotor blade (12, 12') and at least one electric motor (13, 14), which is provided for the tracking of a housing on a tower of the wind turbine (10) as claimed in one of Claims 1 to 3, **characterised in that** a current, which flows in the at least one electric motor (13, 14), is provided as an input signal for a controller, which is provided for the, particularly cyclical, adjustment of an angle of the at least one angularly adjustable rotor blade (12, 12').

5. A wind turbine (10) as claimed in Claim 4, **characterised in that** the current is the sum of the currents which flow in a plurality of electric motors (13, 14), which are used for the tracking of the housing.

6. An energy supply system with at least one turbine (10) as claimed in one of Claims 1 to 5, **characterised in that** provided in the wind turbine (10) there is a safety disconnecting device, in which a protective motor switch (21) of the electric motor (13, 14) is integrated, wherein on actuation of the protective motor switch (21) the safety disconnecting device (43) emits a signal for disconnecting the wind turbine (10) and wherein the wind turbine (10) is enabled for operation again by means of an operator control (42) spatially separated from the wind turbine (10).

7. An energy supply system with at least one wind turbine (10) as claimed in one of Claims 1 to 6, **characterised in that** a protective motor switch (21) of the electric motor is arranged outside a safety disconnecting device (43) of the wind turbine (10), wherein, in particular, actuation of the protective motor switch (21) generates a signal, which is sent to a control device (16, 17).

8. An energy supply system as claimed in one of Claims 6 or 7, **characterised in that** the electric motor (13, 14) is automatically put into operation again after the elapse of a pre-determinable period of time or when the temperature falls below a predetermined value by means of the control device (16, 17) or remotely by means of the operator control (42) separate from the wind turbine (10).

9. A method of operating a wind turbine (10) with a rotor (11) and at least one angularly adjustable rotor blade (12, 12') and an electric motor (13, 14), particularly an asynchronous motor, and with a control device (16, 17) with the following method steps:
- Moving a movable component (12, 15) of the wind turbine (10) with the electric motor (13, 14),
- Measuring the loading of the electric motor (13, 14) and
- Reducing the loading of the electric motor (13, 14) when a first predeterminable loading threshold is exceeded, wherein the reduction of the loading occurs by a reduction in the speed of the rotor (11), by a change in the blade angle of the at least one angularly adjustable rotor blade (12) and/or by a reduction in the output of the wind turbine (10), wherein the loading of the electric motor (13, 14) is controlled to a value below the first pre-determinable loading threshold, wherein the loading is determined by means of a measurement of the speed of the electric motor (13, 14), of the current flowing in the electric motor(s) (13, 14) and/or of the torque, which acts on the electric motor (13, 14) or which the electric motor (13, 14) exerts on the movable component (12, 15), wherein the pre-determinable first loading threshold is a characteristic line of loading values which lies below the actuation characteristic line of a protective motor switch (21) of the electric motor (13, 14).

10. A method as claimed in Claim 9, **characterised in that** before the reduction in the loading of the electric motor (13, 14), the electric motor (13, 14) is stopped, when a third pre-determinable loading threshold is exceeded, for a pre-determinable period of time, wherein subsequently the steps of moving the movable component (12, 15) with the electric motor (13, 14), the measuring of the loading of the electric motor (13, 14) and the reduction of the loading of the electric motor (13, 14), when the first pre-determinable loading threshold is exceeded, are performed, wherein, in particular, the loading of the electric motor (13, 14) is controlled to a value below the pre-determinable loading threshold.

11. A method as claimed in Claims 9 or 10, **characterised in that** the movable component (12, 15) is a machine housing (15) of the wind turbine (10) which is arranged on a tower (19) and the azimuth angle of which is altered by the electric motor (13), and/or that the movable component (12, 15) is the at least one angularly adjustable rotor blade (12, 12') and that the electric motor (14) adjusts the blade angle, wherein, in particular, to reduce the loading of the electric motor (13, 14) a, particularly periodical, change in blade angle of the at least one rotor blade (12) or of another rotor blade (12') occurs, which produces a force on the moveable component (12, 15) in the direction of the movement caused by the electric motor (13, 14).

12. A method as claimed in one of Claims 9 to 11, **characterised in that** on reaching the first loading threshold or a second loading threshold, which lies, in particular, above the first loading threshold, the movement of the moveable component (12, 15) by the motor (13, 14) is interrupted for a pre-determinable period of time, wherein, particularly in the event of the actuation of the protective motor switch (21), the motor is put into operation again, particularly automatically, in accordance with a pre-determinable criterion.

13. A method as claimed in one of Claims 9 to 12, **characterised in that** the electric motor (13, 14) includes a protective motor switch (21), which is arranged outside a safety disconnecting device (43) of the wind turbine (10), whereby on actuation of the protective motor switch (21) a signal is generated, which is transmitted to a control device (16, 17).

14. A method as claimed in Claim 13, **characterised in that** the electric motor (13, 14) is automatically put into operation again after the lapse of a pre-determinable period of time or when the temperature falls below a pre-determinable value by means of the control device (16, 17) or remotely by the operator control (14) separate from the wind turbine (10).

## Revendications

1. Eolienne (10) comprenant un rotor (11), au moins une pale de rotor à angle réglable (12, 12') et au moins un moteur électrique (13, 14), en particulier un moteur asynchrone, pour le déplacement d'une partie mobile (12, 15) de l'éolienne (10), l'éolienne (10) comprenant en outre un dispositif de contrôle (16, 17), **caractérisée en ce qu'**un dispositif de mesure (18) est prévu pour déterminer la charge sur le moteur électrique (13, 14), éolienne dans laquelle, lorsque le dispositif de contrôle (16, 17) dépasse une première limite de charge sur le moteur électrique (13, 14) pouvant être prédéterminée, la charge sur le moteur (13, 14) est réduite en diminuant la vitesse du rotor (11) en modifiant l'angle de la pale de ladite au moins une pale de rotor (12, 12') et/ou en réduisant la puissance de l'éolienne (10), de sorte que la charge sur le moteur électrique (13, 14) est réduite à une valeur inférieure à la première limite de charge prédéterminée, le dispositif de mesure (18) comprenant un dispositif de mesure de la vitesse du moteur électrique (13, 14), un dispositif de mesure de courant pour le courant circulant dans le ou les moteurs électriques (13, 14) et/ou un dispositif de mesure de couple pour mesurer le couple qui agit sur le moteur électrique (13, 14) et le couple que le moteur électrique (13 14) exerce sur la partie mobile (12, 15), la première limite de charge prédéterminée étant une courbe caractéristique des valeurs de charge qui est inférieure à la courbe caractéristique de déclenchement d'un disjoncteur de protection d'un moteur (21) du moteur électrique (13, 14).

2. Eolienne (10) selon la revendication 1, **caractérisée en ce que** la partie mobile (12, 15) est une nacelle (15) de l'éolienne (10) disposée sur une tour (19) et dont l'angle de rotation peut être modifié par le moteur électrique (13) et/ou que la partie mobile (12, 15) est au moins une pale de rotor à angle réglable (12), éolienne dans laquelle le mouvement du moteur électrique (14) provoque un ajustement angulaire de l'angle de la pale, en particulier pour la réduction de la charge sur le moteur électrique (13, 14), en particulier de manière périodique, le changement d'angle de la pale de ladite au moins une pale de rotor (12) et/ou d'une autre pale de rotor (12') produisant une force sur la partie mobile (12, 15) entraînant un mouvement dans une direction prédéterminée, éolienne dans laquelle en particulier, la réduction de la puissance de l'éolienne (10) est provoquée en réduisant le couple d'un générateur (20).

3. Eolienne (10) selon la revendication 1 ou la revendication 2, **caractérisée en ce que**, après avoir atteint la première limite de charge ou une deuxième limite de charge qui est de préférence supérieure à la première limite de charge, le déplacement de la partie mobile (12, 15) par le moteur électrique (13, 14) est interrompu pendant une durée prédéterminée, éolienne dans laquelle, un dispositif (22) est prévu, en particulier un dispositif automatique, pour le redémarrage du moteur électrique (13, 14) pour faire fonctionner à nouveau le moteur électrique (13, 14) après le déclenchement du disjoncteur de protection d'un moteur (21).

4. Eolienne (10) comprenant un rotor (11), au moins une pale de rotor à angle réglable (12, 12') et au moins un moteur électrique (13, 14) prévu pour le suivi d'une nacelle sur la tour de l'éolienne (10) selon l'une quelconque des revendications 1 à 3, **caractérisée en ce qu'**un courant circulant dans ledit au moins un moteur électrique (13, 14) est prévu en tant que signal d'entrée pour une unité de commande, en particulier de manière cyclique, pour le réglage d'un angle d'au moins une pale de rotor à angle réglable (12, 12').

5. Eolienne (10) selon la revendication 4, **caractérisée en ce que** le courant est la somme des courants circulant dans une pluralité de moteurs électriques (13, 14) qui sont utilisés pour le suivi de la nacelle.

6. Système d'alimentation en énergie comportant au moins une éolienne(10) selon l'une quelconque des revendications 1 à 5, **caractérisé en ce qu'**un dispositif de coupure de sécurité (43) est prévu dans un disjoncteur de protection d'un moteur (21) du moteur électrique (13, 14) dans l'éolienne (10), de sorte que lors du déclenchement du disjoncteur de protection d'un moteur (21), le dispositif de coupure de sécurité (43) délivre un signal pour arrêter l'éolienne (10) et que l'éolienne (10), au moyen d'un dispositif de commande (42) séparé de l'éolienne (10), est remise en état de marche.

7. Système d'alimentation en énergie comportant au moins une éolienne (10) selon l'une quelconque des revendications 1 à 6, **caractérisé en ce qu'**un disjoncteur de protection d'un moteur (21) du moteur électrique (13, 14) est disposé à l'extérieur d'un dispositif de coupure de sécurité (43) de ladite éolienne (10), en particulier, le déclenchement du disjoncteur de protection d'un moteur (21) génère un signal qui est envoyé à un dispositif de commande (16, 17).

8. Système d'alimentation en énergie selon la revendication 6 ou la revendication 7, **caractérisé en ce que** le moteur électrique (13, 14), après l'écoulement d'une durée de temps prédéterminée ou lorsqu'il tombe en dessous d'une température prédéterminée, par l'intermédiaire du dispositif de commande (16, 17), ou de l'appareil de commande à distance (42) séparé de éolienne (10), est automatiquement mis en service.

9. Procédé pour le fonctionnement d'une éolienne (10) comprenant un rotor (11), au moins une pale de rotor à angle réglable (12, 12'), un moteur électrique (13, 14), en particulier un moteur asynchrone, et un dispositif de commande (16, 17), comprend les étapes suivantes :
- le déplacement d'une partie mobile (12, 15) de l'éolienne (10) par le moteur électrique (13, 14),
- la mesure de la charge sur le moteur électrique (13, 14),
et
- la réduction de la charge sur le moteur électrique (13, 14) lorsqu'une première limite de charge prédéterminée a été dépassée, la réduction de la charge étant effectuée en réduisant la vitesse du rotor (11) par une modification de l'angle des pales d'au moins une pale de rotor (12) à angle réglable et/ou est effectuée par la réduction de la puissance de l'éolienne (10), la charge sur le moteur électrique (13, 14) étant réduite à une valeur inférieure à la première limite de charge prédéterminée, la charge étant déterminée par la mesure de la vitesse du moteur électrique (13, 14), du courant et/ou du couple dans le ou les moteurs électriques (13, 14) ou du couple que le moteur électrique (13, 14) exerce sur la partie mobile (12, 15), procédé dans lequel la première limite de charge prédéterminée est une courbe caractéristique des valeurs de charge qui est inférieure à la courbe caractéristique de déclenchement d'un disjoncteur de protection d'un moteur (21) du moteur électrique (13, 14).

10. Procédé selon la revendication 9, **caractérisé en ce que**, avant la réduction de la charge sur le moteur électrique (13, 14), le moteur électrique (13, 14) est arrêté en cas de dépassement d'une troisième limite de charge prédéterminée pendant un durée prédéterminée, après quoi les étapes consistant à déplacer la partie mobile (12, 15) par le moteur électrique (13, 14), à mesurer la charge sur le moteur électrique (13, 14) et à réduire la charge sur le moteur électrique (13, 14) lorsque la première limite de charge prédéterminée a été dépassée, sont exécutées, la charge sur le moteur électrique (13, 14) étant réduite à une valeur inférieure à la première limite prédéterminée.

11. Procédé selon la revendication 9 ou la revendication 10, **caractérisé en ce que** la partie mobile (12, 15) est une nacelle (15) de l'éolienne (10) qui est disposée sur une tour (19) et dont l'angle est modifié par le moteur électrique (13) et/ou que la partie mobile (12, 15) est au moins une pale de rotor à angle réglable (12, 12'), le moteur électrique (14) ajustant l'angle de la pale, en particulier pour réduire la charge sur le moteur électrique (13, 14), en particulier de manière périodique, produisant un changement d'angle de la pale de ladite au moins une pale de rotor (12) et/ou d'une autre pale de rotor (12'), une force sur la partie mobile (12, 15) étant générée dans la direction du déplacement provoqué par le moteur électrique (13, 14).

12. Procédé selon l'une quelconque des revendications 9 à 11, **caractérisé en ce que**, après avoir atteint la première limite de charge ou une deuxième limite de charge qui est de préférence au-dessus de la première limite de charge, le déplacement de la partie mobile (12, 15) par le moteur (13, 14) est interrompu pendant une durée prédéterminée, en particulier dans le cas du déclenchement du disjoncteur (21) du moteur électrique (13, 14), le moteur, en particulier de manière automatique, est remis en service conformément à un critère prédéterminé.

13. Procédé selon l'une quelconque des revendications 9 à 12, **caractérisé en ce que** le disjoncteur (21) du moteur électrique (13, 14) est disposé à l'extérieur d'un dispositif de coupure de sécurité (43) de l'éolienne (10), le déclenchement du disjoncteur de protection d'un moteur (21) générant un signal qui est envoyé à un dispositif de commande (16, 17).

14. Procédé selon la revendication 13, **caractérisé en ce que** le moteur électrique (13, 14), après l'écoulement d'une durée de temps prédéterminée ou lorsqu'il tombe en dessous d'une température prédéterminée, par l'intermédiaire du dispositif de commande (16, 17) ou de l'appareil de commande à distance (42) séparé de éolienne (10), est automatiquement mis en service.
